# EUROPEAN PATENT SPECIFICATION

(11) **EP 2 939 981 B1**
(45) Date of publication and mention of the grant of the patent: **31.01.2018**
(21) Application number: 13867204.3
(22) Date of filing: 15.11.2013
(51) Int. Cl.: C02F 1/14, C02F 9/10, C02F 1/06, C02F 103/08, B01D 1/00, B01D 1/26, B01D 3/06, C02F 1/20, C02F 1/44, C02F 1/50, C02F 1/52

(54) **SEAWATER DESALTING APPARATUS AND METHOD USING SOLAR ENERGY FOR CONTINUOUSLY SUPPLYING HEAT**
MEERWASSER ENTSALZUNGSVORRICHTUNG UND -VERFAHREN UNTER VERWENDUNG VON SONNENENERGIE FÜR KONTINUIERLICHER WÄRMEZUFUHR
APPAREIL DE DESSALEMENT D'EAU DE MER ET PROCÉDÉ D'UTILISATION DE L'ÉNERGIE SOLAIRE POUR FOURNIR DE LA CHALEUR EN CONTINU

(30) Priority: 25.12.2012 CN 201210569476
(43) Date of publication of application: 04.11.2015
(73) Proprietor: Zhongying Changjiang International New Energy Investment Co., Ltd., Eastlake New-tech Development Zone Wuhan Hubei 430223 (CN)
(72) Inventor: CHEN, Yilong, Wuhan Hubei 430223 (CN); YANG, Qingping, Wuhan Hubei 430223 (CN); ZHANG, Yanfeng, Wuhan Hubei 430223 (CN)
(74) Representative: Laufhütte, Dieter
(86) International application number: PCT/CN2013/087184
(87) International publication number: WO 2014/101580

(56) References cited:
- WO-A1-01/72638
- CN-A- 102 345 576
- CN-A- 102 531 256
- CN-A- 102 976 427
- CN-U- 201 620 052
- CN-U- 201 999 824
- CN-U- 203 006 975
- US-A- 4 373 996

## Description

### FIELD OF THE INVENTION

The invention relates to an apparatus and a method for desalting seawater using solar energy for continuously supplying heat, belonging to the technical field of seawater desalting (including desalting of inland brackish water). The invention can also be applied to the field of wastewater treatment.

### BACKGROUND OF THE INVENTION

With China's rapid economic development, the shortage of freshwater resources becomes a serious problem in the economically developed southeast coastal regions. Land subsidence has occurred in Beijing, Shanghai, Tianjin, Qingdao and other places due to excessive extraction of groundwater. Thus, since the beginning of the 1980s, China has launched water diversion projects such as water diversion project from Luan River to Tianjin, and water diversion project from Yellow River to Qingdao, and South-North water transfer project.

Remote water diversion project not only costs huge investment but also occupies a lot of arable land, and at the same time causes environmental hazards in the water supplying regions. For example, in the water diversion project from Yellow River to Qingdao, 62 thousand mu (41.33 km²) of area have been occupied, and ecological problems, such as discontinuous flow of Yellow River and vegetation destruction, are resulted. The destruction of the ecological environment is incalculable in the economy.

In addition, some coastal cities, such as Qingdao, Haikou, Lingshui, are formed because of its close proximity to the freshwater river. However, the seawater invades the river about 30-50 km from the estuaries in the circumstances of tide fluctuation and typhoon, and the water in the freshwater rivers in the coastal cities is actually diluted seawater, or freshwater with lowered quality.

The shortage of the freshwater resource has been the crisis in the 21th century, in addition to the energy crisis and CO₂ emissions. To possess more freshwater by scientific and environmentally friendly ways stands for sustainable development of the national economy as well as the affluence of the national living standard.

It has been an important way for a long time for residents living along the coast and people in ocean-going vessels to acquire freshwater by utilizing various heat energy to heat the seawater to produce vapor and condensing the vapor into the freshwater. As a renewable resource, solar energy has a wide distribution, limitless reserves, cleanness in collection and utilization, and zero-CO₂ emission. Thus, the solar energy has been concerned by more and more people. However, the utilization of the solar power energy has been largely restricted due to problems such as decentralization of the solar energy, strong dependence on weather, and instability and discontinuity of the thermal concentration.

Thus, it has been an effective method to solve the shortage of the freshwater resource by finding a technical way including efficiently collecting the solar heat energy and operating continuously day and night for desalting the seawater.

The document US 4 373 996 A discloses an apparatus for producing fresh water from sea water using solar power and multi-stage evaporation based on single-stage vapor cooling, where the strong brine from the different evaporation tanks is partially discharged into the sea, thereby increasing the local salt concentration of the sea water.

### SUMMARY OF THE INVENTION

It is one objective of the invention to provide an apparatus and a method for desalting seawater using solar energy for continuously supplying heat. The apparatus and the method of the invention are capable of continuously producing freshwater much environmentally friendly in the coastal regions or in inland brackish water regions to solve the freshwater scarcity.

Technical scheme of the invention is as follows:
A seawater desalting apparatus using solar energy for continuously supplying heat comprising: a seawater purifying system, and a seawater desalting system. The seawater purifying system is a multi-stage purifying system comprising a seawater extraction well for coarse filtration, a seawater sterilizing clarifier, a multi-stage ultra-filter provided with an active carbon filter layer and a multi-fiber filter core layer, and a deoxygenating-decarbonizing tower for deoxygenation and decarbonization arranged in sequence. A purified seawater tank is disposed between the multi-stage ultra-filter and the deoxygenating-decarbonizing tower. The deoxygenating-decarbonizing tower communicates with a purified seawater main outlet. The seawater extraction well communicates with the seawater sterilizing clarifier via a seawater lifting pump. The seawater sterilizing clarifier communicates with the multi-stage ultra-filter via a first seawater transporting pump. The multi-stage ultra-filter communicates with the purified seawater tank via a second seawater transporting pump. The purified seawater tank communicates with the deoxygenating-decarbonizing tower via a third seawater transporting pump. The deoxygenating-decarbonizing tower communicates with the purified seawater main outlet via a purified seawater pump. The seawater sterilizing clarifier is added with a microbicide and a flocculant. The seawater desalting system comprises: a solar thermal apparatus for concentrating solar energy and collecting heat, a solar energy heat storage tank, a purified seawater heater, and at least one stage of seawater flash evaporator. The seawater flash evaporator comprises a flash evaporator body and a seawater cooler. A heat transfer medium chamber of the solar thermal apparatus, the solar energy heat storage tank, a first heat exchanger of the purified seawater heater utilizing a heat transfer medium as a heat source and a heat transfer medium pump disposed between the solar energy heat storage tank and the first heat exchanger of the purified seawater heater are connected in sequence to form a sealed route for circulating the heat transfer medium. A purified seawater output main pipe of a purified seawater transporting pump in the seawater purifying system communicates with an inlet of the purified seawater heater and the seawater cooler. A seawater outlet of the purified seawater heater communicates with an inlet of a throttling device of the first-stage flash evaporator body via a heated seawater pump. The flash evaporator body comprises: a concentrated brine outlet, a freshwater outlet, and a vapor outlet. Vapor discharged from the vapor outlet passes through a second heat exchanger of the seawater cooler using vapor as a heat source and is accumulated with a freshwater in a freshwater main pipe. A sealed freshwater storage tank disposed at an end of the freshwater main pipe communicates with a vacuum pump. The concentrated brine outlet communicates with a pipe of a salt plant via a concentrated brine pump. A seawater outlet of the seawater cooler communicates with an inlet main pipe of the purified seawater heater via a condenser body of the flash evaporator body. When at least two stage seawater flash evaporators are employed, the purified seawater output main pipe of the purified seawater pump in the seawater purifying system communicates with the seawater outlets of the condenser bodies of each stage seawater flash evaporator. The concentrated brine outlet of a former stage flash evaporator body communicates with an inlet of the throttling device of a next stage flash evaporator body, and the concentrated brine outlet of a last stage flash evaporator body communicates with the pipe of the salt plant via the concentrated brine pump. Pressures in the flash evaporator bodies of each stage are gradually decreased whereby forming negative pressures.

In an embodiment of the present invention, a heated seawater pump having adjustable rotational speed is disposed between the seawater outlet of the purified seawater heater and the flash evaporator body. The seawater outlet of the purified seawater heater communicates with the throttling device disposed on the flash evaporator body via the heated seawater pump, and the throttling device is disposed above a seawater surface in the flash evaporator body. In the flash evaporator body, a foam breaker is disposed above the throttling device, a freshwater collecting disc is disposed above the foam breaker, and the condenser body is disposed on the freshwater collecting disc. The vapor outlet is disposed at a top of the flash evaporator body, and the freshwater outlet is disposed above the freshwater collecting disc, and the concentrated brine outlet is disposed beneath the throttling device.

In an embodiment of the present invention, a seawater temperature sensor and a spare heat exchanger are disposed in the purified seawater heater; and the spare heat exchanger adopts a thermal oil furnace, an electric heating furnace, exhaust heat of flue gas from a boiler, or exhaust heat of waste heat from a turbine as a heat source.

In an embodiment of the present invention, the solar power filed is a tower type solar thermal collector, a parabolic trough type evacuated tubular collector, a glass type evacuated tubular collector, or a heat pipe type evacuated tubular collector.

In an embodiment of the present invention, the seawater extraction well is constructed at a sea beach. A well opening is disposed above a sea level at the highest tide, and a well bottom is disposed multiple meters beneath a sea level at low tides. A well wall adopts a porous concrete structure, rubbles are arranged outside the well wall, and sands are filled in the periphery of the rubbles.

A method for desalting seawater using the above seawater desalting apparatus comprises: multi-stage purifying the seawater to produce a purified seawater; collecting solar energy by the solar thermal apparatus to heat the heat transfer medium whereby converting the solar energy into heat energy of the heat transfer medium; continuously heating the purified seawater to a preset temperature by the heat energy of the heat transfer medium, and transporting the heated purified seawater to at least one-stage flash evaporator for flash evaporation; allowing a negative pressure to form in the body of a one-stage flash evaporator, or pressures in the flash evaporator bodies of each stage to gradually decrease to form a negative pressure during multi-stage flash evaporation; condensing a vapor after the flash evaporation to separate the freshwater, and converting remaining vapor into the freshwater by the seawater cooler; and transporting a non-vaporized concentrated brine from a bottom of the flash evaporator to the salt plant.

When multi-stage flash evaporators are employed, the concentrated brine at the bottom of the former stage flash evaporator successively flow into a next stage flash evaporator, and the freshwater is gradually condensed and separated out during the multi-stage evaporation process, and the non-vaporized concentrated brine is transported to the salt plant. At the same time the heat energy of the sunlight is collected by the solar thermal apparatus and the heat transfer medium is utilized to heat the purified seawater, the heat energy of the heat transfer medium is stored in the solar energy heat storage tank so as to continuously heat the purified seawater using the stored heat transfer medium during nocturnal periods or cloudy days.

In an embodiment of the present invention, the preset temperature of the purified seawater heated by the heat transfer medium is 55°C-70°C or 70°C-120°C, and the heat transfer medium is heated to a temperature of 178°C-600°C by the solar thermal apparatus.

In an embodiment of the present invention, the preset temperature of the purified seawater heated by the heat transfer medium is 70°C, and the heat transfer medium is heated to the temperature of 275°C-395°C by the solar thermal apparatus.

Advantages of the invention are summarized as follows:
The high efficient solar thermal apparatus is utilized to heat the heat transfer medium (such as the conduction oil, the silicone oil, the paraffin wax, and the molten salt), and the heat transfer medium is then employed to heat the purified seawater to a preset temperature. Thus, the scale formation resulted from seawater heating directly by the solar thermal apparatus is avoided, the seawater desalting system is enabled to operate at the best temperature parameters, and the solar thermal apparatus is also enable to operate at its best parameters (the heat transfer medium is heated to 275°C-395°C or 178°C-600°C), thereby realizing efficiency for collecting the heat energy of the solar power to the utmost.

In addition, the freshwater plant is generally required to continuously supply water for 24 hrs. The heat energy of the sunlight is stored by the heat transfer medium, so that the seawater can be heated in nocturnal periods, and the freshwater is continuously produced.

The solar energy heat storage tank is designed for the purpose of maintaining a stable output of the heat energy of the solar power in nocturnal periods and cloudy days as well as continuously supplying freshwater to civil use or industrial use for 24 hrs. The function of the solar energy heat storage tank is storing the solar energy during daytime as much as possible and using the stored solar energy during the night.

The seawater extraction well is constructed in a sea beach, a position of a well opening being above the sea level at the highest tide, a well depth is several meters lower than the sea level at the lowest tide, the diameter of the well satisfies the extracted seawater volume. Thus, the seawater accommodated in the well has been preliminarily naturally filtered by the sands of the beach thereby being excluded from marine organisms and impurities. In addition, since the sea beach is washed every day by the seawater at the high tide and the low tide, the sea beach always keeps the natural cleaning and filtering functions. The method for constructing a well on the beach is that a well wall adopts porous concrete structure with multiple pores, rubbles are arranged in the periphery of the well wall, and sands of the beach are filled outside the rubbers.

The seawater sterilizing clarifier is added with a microbicide (such as chlorine) for killing planktons, microbes, or bacteria in the seawater, and then added with the flocculant (such as FeCl₂ and alum) so as to precipitate mass substances and clarify the seawater. A supernatant in the upper part of the clarifier is transferred by the first seawater transporting pump to the multi-stage ultra-filter where the supernatant is treated with multi-stage ultra-filtration and a purified seawater is then stored in the purified seawater tank. Sediments in the bottom of the seawater sterilizing clarifier (beneath the inlet of the first seawater transporting pump) is required to be flushed and cleaned periodically (using a small volume of purified seawater) to discharge sewage to a wastewater treatment plant. The multi-stage ultra-filter is also periodically backwashed by seawater so as to recover the cleaning and filtering functions of each filter layer.

When the seawater desalting system is started, the purified seawater is driven by the seawater pump to enter the deoxygenating-decarbonizing tower to remove oxygen and CO₂ therein because that the seawater generally contains 3.5 wt. % of salts and has strong corrosivity, and the existence of the oxygen and CO₂ facilitates the corrosion of the seawater on the apparatus.

The purified seawater heater comprises a heating container, and the first heat exchanger and a spare heat exchanger disposed in the heating container. The first heat exchanger is employed for the purpose of heating the seawater to a certain temperature, thus, the purified seawater heater is also provided with the seawater temperature sensor for measuring the temperature of the heated seawater. However, in conditions of successive cloudy or rainy days, it may be difficult to ensure 24 hrs of continuous freshwater supplying, thus, the purified seawater heater is provided with the spare heat exchanger, and various auxiliary heat sources (such as thermal oil furnace, electric heating furnace, exhaust heat of flue gas from boilers, and exhaust heat of waste heat from turbines) are employed to heat the seawater in cloudy rainy seasons so as to continuously produce the freshwater.

The flash evaporator comprises the flash evaporator body and the seawater cooler. The flash evaporator body comprises: the throttling device, the foam breaker, and the freshwater collecting disc bottom-up. The arrangement of the throttling device on the flash evaporator body enables the pressure of the seawater to sharply decrease when entering the flash evaporator. A large amount of the seawater is evaporated. During the raise of the vapor, large seawater drops carried in the vapor is obstructed by the foam breaker (the foam breaker is made of steel wire meshes with small areolae, such as 200-mesh, 300-mesh, or 400-mesh, the material is anticorrosive, such as stainless steel, titanium alloy wire, or carbon fibers). The vapor passing through the foam breaker reaches the condenser body where one part of the vapor is condensed into the freshwater and fall into the freshwater collecting disc and is transported to the freshwater tank, while the other part of the vapor passes through the top of the flash evaporator and enters the seawater cooler where the vapor is condensed again because the seawater is sprayed onto the second heat exchanger in the seawater cooler, thus, the latent heat is further released, and the condensed freshwater is transported to the freshwater tank.

The multi-stage flash evaporator comprises N signal stage flash evaporators. N is a positive integer. The freshwater output pipe of each single stage flash evaporator communicates with the sealed freshwater storage tank via a freshwater main pipe. An inlet pipe of the vacuum pump is connected to a top of the sealed freshwater storage tank, so that pressures in each stage flash evaporator gradually decrease to form a negative pressure during the operation of the vacuum pump, and the heated seawater in each stage flash evaporator tends to be vaporized. The produced vapor releases the latent heat and is condensed into the freshwater when it transfers heat with relatively cold seawater. The concentrated seawater in the bottom of each flash evaporator is gradually cooled and flows into the next stage flash evaporator where the concentrated seawater is flash vaporized and then condensed into the freshwater while the remaining un-vaporized concentrated brine is transported to the salt plant.

### BRIEF DESCRIPTION OF THE DRAWINGS

The invention is described hereinbelow with reference to the accompanying drawings, in which:
FIG. **1** is a structure diagram of a seawater desalting apparatus using solar energy for continuously supplying heat; and
FIG. **2** is a structure diagram of a local part of a seawater extraction well.

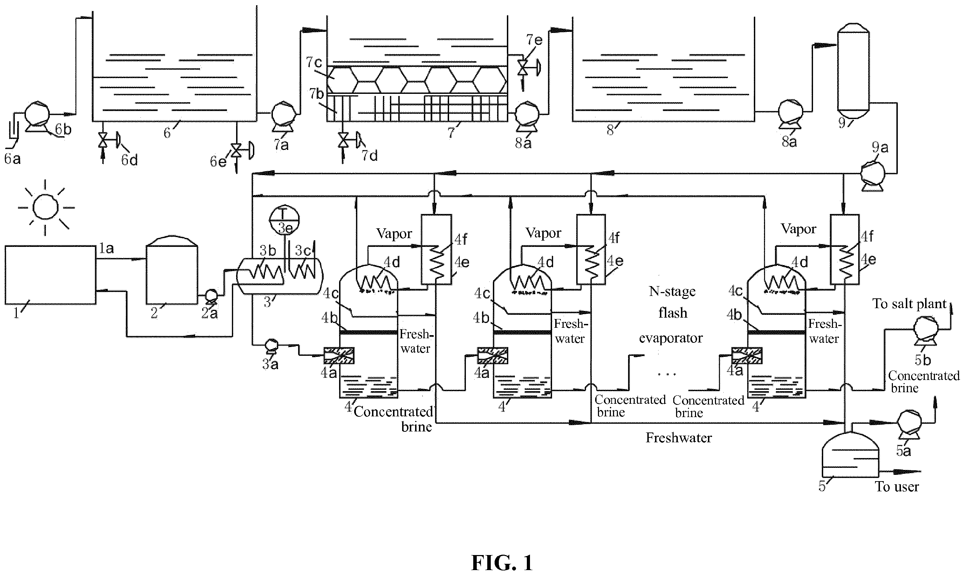

In FIG. **1, 1** is a solar thermal field for concentrating solar energy and collecting heat, **1a** is a delivery main pipe of the solar thermal field, a heat transfer medium is accommodated in the main pipe. **2** is a solar heat storage tank, **2a** is a heat transfer medium pump. **3** is a seawater heater, **3b** is a heat exchanger using the heat transfer medium, **3a** is a heated seawater pump with adjustable rotational speed, and **3e** is a temperature sensor disposed in the seawater heater **3. 4** is a single-stage flash evaporator, N represents a positive integer, when N=1, the flash evaporator is a 1-stage flash evaporator; when N=2, the flash evaporator is a 2-stage flash evaporator, and similarly N refers to a N-stage flash evaporator. Generally, N=3-9, and when N=9 in a best mode to carry out the invention, the last at the most right side is the 9-stage flash evaporator. **4a** is a throttling device disposed in a bottom of the flash evaporator, **4b** is a foam breaker, and **4c** is a freshwater collecting disc, **4d** is a condenser body, **4e** is a seawater cooler, and a vapor heat exchanger **4f** is disposed therein. **5** is a sealed freshwater storage tank, a top of the tank is connected to a vacuum pump **5a** via a pipe. **5b** is a concentrated brine pump disposed at a concentrated brine output pipe of the flash evaporator of the last stage. **6** is a seawater sterilizing clarifier, **6a** is a seawater extraction well constructed with a top above a highest sea level at high tides, a depth of the well is several meters lower than a sea level at low tides, and a diameter of the well is appropriate (which satisfies the extraction of a certain amount of seawater). **6b** is a seawater lifting pump, **6d** is a switch valve at a purified seawater inlet, and **6e** is a blowoff valve of the seawater sterilizing clarifier **6** (when the switch valve **6d** at the and the blowoff valve **6e** are turned on, the purified seawater is introduced to the bottom of the seawater sterilizing clarifier **6** to flush a sludge, and an output pipe of the blowoff valve **6e** communicates with a wastewater treatment plant). **7** is a multi-stage ultra-filter, **7b** is an active carbon filter layer, **7c** is a multi-fiber filter core layer, **7d** is a first backwashing valve for introducing purified seawater, **7e** is a second backwashing valve for discharging sludge (the first backwashing valve **7d** and the second backwashing valve **7e** are periodically opened to introduce the purified seawater to blush the filter layers within the multi-stage ultra-filter **7** so as to recover the cleaning and filtering functions of each filter layer). **8** is a purified seawater tank, **9** is a deoxygenating-decarbonizing tower, **7a, 8a** are seawater transporting pumps, and **9a** is a purified seawater pump.

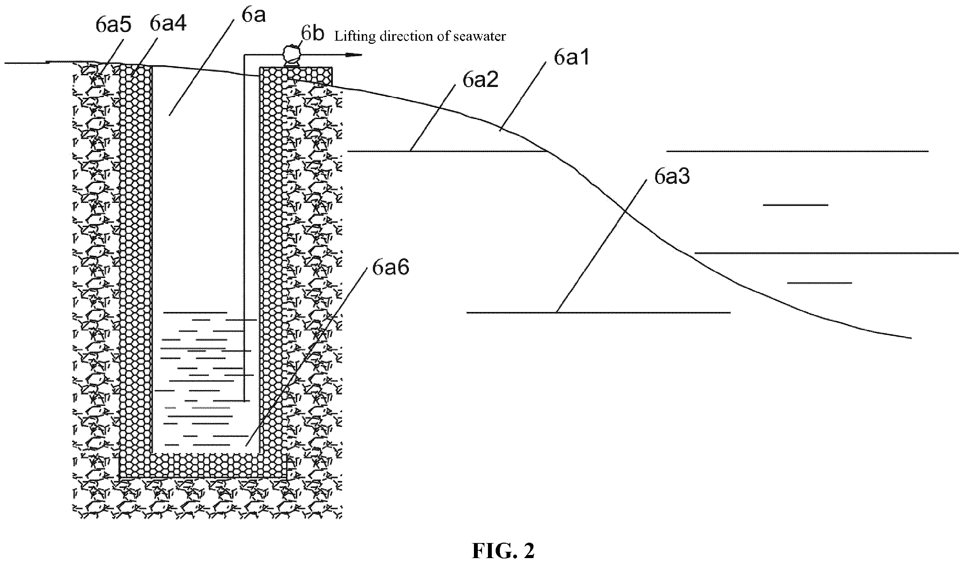

As shown in FIG. **2****, 6b** is a seawater lift pump, **6a** is a seawater extraction well, **6a1** is a seaside beach, **6a2** is a highest sea level at high tide, **6a3** is a lowest sea level, **6a4** is a porous concrete wall, **6a5** is rubbles, **6a6** is sea sand at a well bottom which will be elevated along with the time and are required to removed periodically.

### DETAILED DESCRIPTION OF THE EMBODIMENTS

As shown in FIGs. **1-2****,** seawater desalting apparatus using solar energy for continuously supplying heat comprises: a seawater purifying system, and a seawater desalting system. The seawater desalting system comprises: a solar thermal apparatus **1** for concentrating solar energy and collecting heat, a solar energy heat storage tank **2,** a purified seawater heater **3,** and at least one stage of seawater flash evaporator. The seawater flash evaporator comprises: a flash evaporator body **4** and a seawater cooler **4e.** A heat transfer medium chamber of the solar thermal apparatus **1,** the solar energy heat storage tank **2,** a first heat exchanger **3b** of the purified seawater heater **3** utilizing a heat transfer medium as a heat source are connected in sequence to form a sealed route for circulating the heat transfer medium. A purified seawater output main pipe of a purified seawater transporting pump **9a** in the seawater purifying system communicates with an inlet of the purified seawater heater **3** and the seawater cooler **4e.** A seawater outlet of the purified seawater heater **3** communicates with an inlet of a throttling device **4a** of the first-stage flash evaporator body via a heated seawater pump **3a.** The flash evaporator body **4** comprises: a concentrated brine outlet, a freshwater outlet, and a vapor outlet. Vapor discharged from the vapor outlet passes through a second heat exchanger **4f** of the seawater cooler **4e** using vapor as a heat source and is accumulated with a freshwater in a freshwater main pipe. A sealed freshwater storage tank **5** disposed at an end of the freshwater main pipe communicates with a vacuum pump **5a**. The concentrated brine outlet communicates with a pipe of a salt plant via a concentrated brine pump **5b**. A seawater outlet of the seawater cooler **4e** communicates with an inlet main pipe of the purified seawater heater **3** via a condenser body **4d** of the flash evaporator body **4.** When at least two stage seawater flash evaporators are employed, the purified seawater output main pipe of the purified seawater pump **9a** in the seawater purifying system communicates with the seawater outlets of the condenser bodies **4d** of each stage seawater flash evaporator. The concentrated brine outlet of a former stage flash evaporator body **4** communicates with an inlet of the throttling device **4a** of a next stage flash evaporator body **4,** and the concentrated brine outlet of a last stage flash evaporator body **4** communicates with the pipe of the salt plant via the concentrated brine pump **5b**. Pressures in the flash evaporator bodies **4** of each stage are gradually decreased whereby forming negative pressures.

The seawater purifying system is a multi-stage purifying system comprising a seawater extraction well **6a** for coarse filtration, a seawater sterilizing clarifier **6,** a multi-stage ultra-filter **7** provided with an active carbon filter layer and a multi-fiber filter core layer, and a deoxygenating-decarbonizing tower **9** for deoxygenation and decarbonization. A purified seawater tank **8** is disposed between the multi-stage ultra-filter **7** and the deoxygenating-decarbonizing tower **9.** The deoxygenating-decarbonizing tower **9** communicates with a purified seawater main outlet. The seawater extraction well **6a** communicates with the seawater sterilizing clarifier **6** via a seawater lifting pump **6b.** The seawater sterilizing clarifier **6** communicates with the multi-stage ultra-filter 7 via a first seawater transporting pump **7a.** The multi-stage ultra-filter **7** communicates with the purified seawater tank **8** via a second seawater transporting pump **8a.** The purified seawater tank **8** communicates with the deoxygenating-decarbonizing tower **9** via a third seawater transporting pump **8a.** The deoxygenating-decarbonizing tower **9** communicates with the purified seawater main outlet via a purified seawater pump **9a.** The seawater sterilizing clarifier **6** is added with a microbicide and a flocculant.

A method for desalting seawater by applying the above seawater desalting apparatus comprises: multi-stage purifying the seawater to produce a purified seawater; collecting solar energy by the solar thermal apparatus **1** to heat the heat transfer medium whereby converting the solar energy into heat energy of the heat transfer medium; continuously heating the purified seawater to a preset temperature by the heat energy of the heat transfer medium, and transporting the heated purified seawater to at least one-stage flash evaporator for flash evaporation; allowing pressures in the flash evaporator bodies **4** of each stage to gradually decrease to form a negative pressure during the flash evaporation; condensing a vapor after the flash evaporation to separate the freshwater, and converting remaining vapor into the freshwater by the seawater cooler **4e;** and transporting a non-vaporized concentrated brine from a bottom of the flash evaporator to the salt plant.

When multi-stage flash evaporators are employed, the concentrated brine at the bottom of the former stage flash evaporator successively flow into a next stage flash evaporator, and the freshwater is gradually condensed and separated out during the multi-stage evaporation process, and the non-vaporized concentrated brine is transported to the salt plant. At the same time the heat energy of the sunlight is collected by the solar thermal apparatus **1** and the heat transfer medium is utilized to heat the purified seawater, the heat energy of the heat transfer medium is stored in the solar energy heat storage tank **2** so as to continuously heat the purified seawater using the stored heat transfer medium during nocturnal periods or cloudy days.

The preset temperature of the purified seawater heated by the heat transfer medium is 55°C-70°C or 70°C-120°C, and the heat transfer medium is heated to a temperature of 178°C-600°C by the solar thermal apparatus.

The preset temperature of the purified seawater heated by the heat transfer medium is 70°C, and the heat transfer medium is heated to the temperature of 275°C-395°C by the solar thermal apparatus **1.**

To desalt the seawater using the seawater desalting device continuously supplied with heat by the solar energy, the seawater lift pump **6b** was firstly started, and the seawater is extracted from the seawater extraction well **6a** and fed to the seawater sterilizing clarifier **6.** The seawater extraction well **6a** is constructed in a sea beach, a position of a well opening being above the sea level at the highest tide **6a2,** and a well depth is lower than the sea level at the lowest tide **6a3,** so that the seawater accommodated in the well has been preliminarily naturally filtered by the sands of the beach thereby being excluded from marine organisms and impurities. In addition, since the sea beach is washed every day by the seawater at the high tide and the low tide, the sea beach always keeps the natural cleaning and filtering functions. The method for constructing a well on the beach is that a well wall adopts porous concrete structure **6a4** with multiple pores, rubbles **6a5** are arranged in the periphery of the well wall, and sands of the beach are filled outside the rubbles **6a5.**

The seawater sterilizing clarifier **6** is added with a microbicide (such as chlorine) for killing planktons, microbes, or bacteria in the seawater, and then added with the flocculant (such as FeCl₂ and alum) so as to precipitate mass substances and clarify the seawater. A supernatant in the upper part of the clarifier **6** is transferred by the first seawater transporting pump **7a** to the multi-stage ultra-filter 7 where the supernatant is treated with multi-stage ultra-filtration and a purified seawater is then stored in the purified seawater tank **8.** Sediments in the bottom of the seawater sterilizing clarifier **6** (beneath the inlet of the first seawater transporting pump) is required to be flushed and cleaned periodically (using a small volume of purified seawater) to discharge sewage to a wastewater treatment plant. The multi-stage ultra-filter **7** is also periodically backwashed by seawater so as to recover the cleaning and filtering functions of each filter layer.

When the seawater desalting system is started, the purified seawater is driven by the seawater pump **8a** to enter the deoxygenating-decarbonizing tower **9** to remove oxygen and CO₂ therein because that the seawater generally contains 3.5 wt. % of salts and has strong corrosivity, and the existence of the oxygen and CO₂ facilitates the corrosion of the seawater on the apparatus.

During the seawater desalting process, the solar energy collected by the solar thermal field 1 in diurnal periods is converted into heat energy of the heat transfer medium in the delivery main pipe **1a,** and the heat energy is stored in the heat storage tank **2** via the heat transfer medium. The heat transfer medium flows into the first heat exchanger **3b** in the purified seawater heater **3** under the drive of a heat transfer medium pump **2a** to heat the purified seawater (generally to a temperature of 55°C-120°C). In this example, the temperature is preset to be 70°C. The heated seawater is driven by the heated seawater pump **3a** and transported to a first-stage flash evaporator body **4** (the speed of the heated seawater pump **3a** is adjusted to control the flow rate of the seawater transported to the first-stage flash evaporator thereby controlling the seawater level in the flash evaporator body **4**). Since the pressure in the flash evaporator body is negative, the pressure of the heated seawater is suddenly decreased when passing through the throttling device **4a** and is transformed into vapor. During the raise of the vapor, large seawater drops carried in the vapor is obstructed by a foam breaker **4b** and fall down to the bottom of the flash evaporator body **4.** The vapor rises to a top of the flash evaporator body **4** and reaches the condenser body **4d** to release a latent heat. A part of the vapor is condensed into freshwater which falls down in the freshwater collecting disc **4c** and is accumulated into the sealed freshwater storage tank **5** via pipes, and the remaining non-condensed vapor enters the second heat exchanger **4f** of the seawater cooler **4e** where the vapor is cooled again by the seawater with relatively low temperature to release the latent heat, the condensed freshwater flows to a freshwater main pipe and is accumulated in the sealed freshwater storage tank **5.** In the meanwhile, the concentrated brine in the bottom of the first-stage flash evaporator body **4** automatically enters a second-stage flash evaporator body **4** because the operation of the vacuum pump **5a** arranged at a top of the sealed freshwater storage tank **5** forms a pressure difference between the first-stage flash evaporator body **4** and the second-stage flash evaporator body **4.** When the concentrated brine enters the second-stage flash evaporator, the freshwater production process from the throttling device **4a** to the second heat exchanger **4f** is repeated again. The above processes are repeated until the last stage flash evaporator body **4.** The last stage is the ninth-stage flash evaporator. The concentrated brine from the last stage flash evaporator body **4** is finally transported to the salt plant via the salt pump **5b** for subsequent treatment. Thus, the seawater entering the first-stage flash evaporator is treated with nine stage evaporation processes, and approximately 40% of the seawater is condensed and converted into the freshwater.

The desalting effect of the seawater is not always in positive correlation with the temperature. When the seawater is heated to 75°C-78°C, the salts in the seawater (sodium, calcium, magnesium ions) quickly form scales in the apparatus, affecting the heat transfer and decreasing the working efficiency thereof. The addition of antisludging agent into the seawater is capable of preventing scale formation even when the seawater is heated to 120°C, but it has to pay much cost to remove the antisludging agent therefrom in the subsequent. Thus, a best temperature parameter to prevent the scale formation is approximately 70°C. It is also operable within the temperature ranges of 55°C-70°C, 70°C-120°C, or others to conduct the seawater desalting process, but the comprehensive benefits thereof are poorer than at the temperature of 70°C.

Advantages of the invention are as follows:
First, because a best temperature parameter to reach high efficiency of the solar thermal apparatus (the best operating parameter of the current solar thermal apparatus) is 75°C-395°C (adopting the conduction oil as the medium) or 178°C-610°C (adopting a molten salt as the medium), the high efficient heat transfer medium (such as the conduction oil, silicone oil, paraffin wax, and the molten salt) is adopted to satisfy the temperature operating parameters of the solar thermal apparatus, and the heat transfer medium is used to heat the seawater to approximately 70°C. Thus, the scale formation resulted from seawater heating directly by the solar thermal apparatus is avoided, both the seawater desalting systems and the solar power filed operate at the best temperature parameters, thereby realizing efficiency for collecting the heat energy of the solar power to the utmost.

Second, the freshwater plant is generally required to continuously supply water for 24 hrs. The heat energy of the sunlight is stored by the heat transfer medium (such as the conduction oil, the silicone oil, the paraffin wax, and the molten salt), so that the seawater can be heated in nocturnal periods, and the freshwater is continuously produced.

Because of the highly efficient solar thermal apparatus is adopted, the multi-stage flash evaporator structures are capable of efficiently collecting the relatively dispersed solar energy and accomplish the heating and evaporation of the seawater. The desalting rate of the seawater reaches 40%, and the solar energy can be stored to enable the seawater desalting apparatus to continuously operate to produce the freshwater in nocturnal periods. The produced freshwater has good quality and reaches the standard of drinking water. Furthermore, the green solar energy is primarily utilized, so that the seawater desalting process is environmentally friendly, high efficient with high yield.

## Claims

1. A seawater desalting apparatus using solar energy for continuously supplying heat, the apparatus comprising: a seawater purifying system, and a seawater desalting system; **characterized in that**
the seawater purifying system is a multi-stage purifying system comprising a seawater extraction well (6a) for coarse filtration, a seawater sterilizing clarifier (6), a multi-stage ultra-filter (7) provided with an active carbon filter layer (7b) and a multi-fiber filter core layer (7c), and a deoxygenating-decarbonizing tower (9) for deoxygenation and decarbonization arranged in sequence;
a purified seawater tank (8) is disposed between the multi-stage ultra-filter (7) and the deoxygenating-decarbonizing tower (9); the deoxygenating-decarbonizing tower (9) communicates with a purified seawater main outlet;
the seawater extraction well (6a) communicates with the seawater sterilizing clarifier (6) via a seawater lifting pump (6b); the seawater sterilizing clarifier (6) communicates with the multi-stage ultra-filter (7) via a first seawater transporting pump (7a); the multi-stage ultra-filter (7) communicates with the purified seawater tank (8) via a second seawater transporting pump (8a); the purified seawater tank (8) communicates with the deoxygenating-decarbonizing tower (9) via a third seawater transporting pump (8a); the deoxygenating-decarbonizing tower (9) communicates with the purified seawater main outlet via a purified seawater pump (9a);
the seawater sterilizing clarifier (6) is added with a microbicide and a flocculant; and
the seawater desalting system comprises: a solar thermal apparatus (1) for concentrating solar energy and collecting heat, a solar energy heat storage tank (2), a purified seawater heater (3), and at least one stage of seawater flash evaporator;
the seawater flash evaporator comprises: a flash evaporator body (4) and a seawater cooler (4e);
a heat transfer medium chamber of the solar thermal apparatus (1), the solar energy heat storage tank (2), a first heat exchanger (3b) of the purified seawater heater (3) utilizing a heat transfer medium as a heat source and a heat transfer medium pump (2a) disposed between the solar energy heat storage tank (2) and the first heat exchanger (3b) of the purified seawater heater (3) are connected in sequence to form a sealed route for circulating the heat transfer medium;
a purified seawater output main pipe of a purified seawater transporting pump (9a) in the seawater purifying system communicates with an inlet of the purified seawater heater (3) and the seawater cooler (4e); a seawater outlet of the purified seawater heater (3) communicates with an inlet of a throttling device (4a) of the first-stage flash evaporator body (4) via a heated seawater pump (3 a);
the flash evaporator body (4) comprises: a concentrated brine outlet, a freshwater outlet, and a vapor outlet; vapor discharged from the vapor outlet passes through a second heat exchanger (4f) of the seawater cooler (4e) using vapor as a heat source and is accumulated with a freshwater in a freshwater main pipe; a sealed freshwater storage tank (5) disposed at an end of the freshwater main pipe communicates with a vacuum pump (5a); the concentrated brine outlet communicates with a pipe of a salt plant via a concentrated brine pump (5b);
a seawater outlet of the seawater cooler (4e) communicates with an inlet main pipe of the purified seawater heater (3) via a condenser body (4d) of the flash evaporator body (4); when at least two stage seawater flash evaporators are employed, the purified seawater output main pipe of the purified seawater pump (9a) in the seawater purifying system communicates with the seawater outlets of the condenser bodies (4d) of each stage seawater flash evaporator;
the concentrated brine outlet of a former stage flash evaporator body (4) communicates with an inlet of the throttling device (4a) of a next stage flash evaporator body (4), and the concentrated brine outlet of a last stage flash evaporator body (4) communicates with the pipe of the salt plant via the concentrated brine pump (5b); and pressures in the flash evaporator bodies (4) of each stage are gradually decreased whereby forming negative pressures.

2. The apparatus of claim 1, **characterized in that**
a heated seawater pump (3a) having adjustable rotational speed is disposed between the seawater outlet of the purified seawater heater (3) and the flash evaporator body (4); the seawater outlet of the purified seawater heater (3) communicates with the throttling device (4a) disposed on the flash evaporator body (4) via the heated seawater pump (3a), and the throttling device (4a) is disposed above a seawater surface in the flash evaporator body (4); in the flash evaporator body (4), a foam breaker (4b) is disposed above the throttling device (4a), a freshwater collecting disc (4c) is disposed above the foam breaker (4b), and the condenser body (4d) is disposed on the freshwater collecting disc (4c); and the vapor outlet is disposed at a top of the flash evaporator body (4), and the freshwater outlet is disposed above the freshwater collecting disc (4c), and the concentrated brine outlet is disposed beneath the throttling device (4a).

3. The apparatus of claim 1 or 2, **characterized in that** a seawater temperature sensor (3e) and a spare heat exchanger (3c) are disposed in the purified seawater heater (3); and the spare heat exchanger (3c) adopts a thermal oil furnace, an electric heating furnace, exhaust heat of flue gas from a boiler, or exhaust heat of waste heat from a turbine as a heat source.

4. The apparatus of claim 1, **characterized in that** the solar thermal apparatus (1) is a tower type solar thermal collector, a parabolic trough type evacuated tubular collector, a glass type evacuated tubular collector, or a heat pipe type evacuated tubular collector.

5. The apparatus of claim 1, **characterized in that** the seawater extraction well (6a) is constructed at a sea beach (6a1); a well opening is disposed above a sea level at the highest tide (6a2), and a well bottom is disposed multiple meters beneath a sea level at low tides (6a3); a well wall (6a4) adopts a porous concrete structure, rubbles (6a5) are arranged outside the well wall (6a4), and sands are filled in the periphery of the rubbles.

6. A method for desalting seawater using the seawater desalting apparatus of any of claims 1-5, the method comprising: multi-stage purifying the seawater to produce a purified seawater; collecting solar energy by the solar thermal apparatus (1) to heat the heat transfer medium whereby converting the solar energy into heat energy of the heat transfer medium; continuously heating the purified seawater to a preset temperature by the heat energy of the heat transfer medium, and transporting the heated purified seawater to at least one-stage flash evaporator for flash evaporation; allowing a negative pressure to form in the body (4) of a one-stage flash evaporator, or pressures in the flash evaporator bodies (4) of each stage to gradually decrease to form a negative pressure during multi-stage flash evaporation; condensing a vapor after the flash evaporation to separate the freshwater, and converting remaining vapor into the freshwater by the seawater cooler (4e); and transporting a non-vaporized concentrated brine from a bottom of the flash evaporator to the salt plant;
**characterized in that**
when multi-stage flash evaporators are employed, the concentrated brine at the bottom of the former stage flash evaporator successively flow into a next stage flash evaporator, and the freshwater is gradually condensed and separated out during the multi-stage evaporation process, and the non-vaporized concentrated brine is transported to the salt plant; and
at the same time the heat energy of the sunlight is collected by the solar thermal apparatus (1) and the heat transfer medium is utilized to heat the purified seawater, the heat energy of the heat transfer medium is stored in the solar energy heat storage tank (2) so as to continuously heat the purified seawater using the stored heat transfer medium during nocturnal periods or cloudy days.

7. The method of claim 6, **characterized in that** the preset temperature of the purified seawater heated by the heat transfer medium is 55°C-70°C or 70°C-120°C, and the heat transfer medium is heated to a temperature of 178°C-600°C by the solar thermal apparatus (1).

8. The method of claim 6, **characterized in that** the preset temperature of the purified seawater heated by the heat transfer medium is 70°C, and the heat transfer medium is heated to the temperature of 275°C-395°C by the solar thermal apparatus (1).

## Patentansprüche

1. Meerwasserentsalzungsvorrichtung unter Verwendung von Sonnenenergie für kontinuierliche Wärmezufuhr, wobei die Vorrichtung umfasst: ein Meerwasseraufbereitungssystem und ein Meereswasserentsalzungssystem;
**dadurch gekennzeichnet, dass**
das Meerwasseraufbereitungssystem ein mehrstufiges Aufbereitungssystem ist, welches einen Meerwasserentnahmebrunnen (6a) für Grobfiltration, ein sterilisierendes Meerwasserklärbecken (6), einen mehrstufigen Ultrafilter (7), der mit einer Aktivkohlefilterschicht (7b) und einer Mehrfaser-Filterkernschicht (7c) versehen ist, und einen desoxidierenden-entkarbonisierenden Turm (9) für Desoxidation und Entkarbonisierung umfasst, die in Reihe angeordnet sind.
ein Tank für aufbereitetes Meerwasser (8) zwischen dem mehrstufigen Ultrafilter (7) und dem desoxidierenden-entkarbonisierenden Turm (9) angeordnet ist; der desoxidierende-entkarbonisierende Turm (9) mit einem Hauptauslass für aufbereitetes Meerwasser kommuniziert;
der Meerwasserentnahmebrunnen (6a) mittels einer Meerwasserhebepumpe (6b) mit dem sterilisierenden Meerwasserklärbecken (6) kommuniziert; das sterilisierende Meerwasserklärbecken (6) mittels einer ersten Meerwasserförderpumpe (7a) mit dem mehrstufigen Ultrafilter (7) kommuniziert; der mehrstufige Ultrafilter (7) mittels einer zweiten Meerwasserförderpumpe (8a) mit dem Tank für aufbereitetes Meerwasser (8) kommuniziert; der Tank für aufbereitetes Meerwasser (8) mittels einer dritten Meerwasserförderpumpe (8a) mit dem desoxidierenden-entkarbonisierenden Turm (9) kommuniziert; der desoxidierende-entkarbonisierende Turm (9) mittels einer Pumpe für aufbereitetes Meerwasser (9a) mit dem Hauptauslass für aufbereitetes Meerwasser kommuniziert;
dem sterilisierenden Meerwasserklärbecken (6) ein Mikrobizid und ein Flockungsmittel zugegeben werden; und
das Meerwasserentsalzungssystem umfasst: eine solarthermische Vorrichtung (1) zum Konzentrieren von Sonnenenergie und Speichern von Wärme, einen Sonnenenergiewärmespeichertank (2), einen Heizer für aufbereitetes Meerwasser (3) und mindestens eine Stufe eines Meerwasserschnellverdampfers;
der Meerwasserschnellverdampfer umfasst: einen Schnellverdampferkörper (4) und einen Meerwasserkühler (4e);
eine Wärmeübertragungsmediumkammer der solarthermischen Vorrichtung (1), der Sonnenenergiewärmespeichertank (2), ein erster Wärmetauscher (3b) des Heizers für aufbereitetes Meerwasser (3), der ein Wärmeübertragungsmedium als Wärmequelle nutzt, und eine Wärmeübertragungsmediumpumpe (2a), die zwischen dem Sonnenenergiewärmespeichertank (2) und dem ersten Wärmetauscher (3b) des Heizers für aufbereitetes Meerwasser (3) angeordnet ist, in Reihe verbunden sind, um einen abgedichteten Weg zum Umwälzen des Wärmeübertragungsmediums zu bilden;
ein Ausflusshauptrohr für aufbereitetes Meereswasser einer Förderpumpe für aufbereitetes Meerwasser (9a) in dem Meerwasseraufbereitungssystem mit einem Einlass des Heizers für aufbereitetes Meerwasser (3) und dem Meerwasserkühler (4e) kommuniziert; ein Meerwasserauslass des Heizers für aufbereitetes Meerwasser (3) mittels einer Pumpe für erwärmtes Meerwasser (3a) mit einem Einlass einer Drosselvorrichtung (4a) des Schnellverdampferkörpers der ersten Stufe (4) kommuniziert;
der Schnellverdampferkörper (4) umfasst: einen Auslass für konzentrierte Sole, einen Frischwasserauslass und einen Dampfauslass; von dem Dampfauslass abgelassener Dampf durch einen zweiten Wärmetauscher (4f) des Meerwasserkühlers (4e) tritt, der Dampf als Wärmequelle nutzt, und in einem Frischwasserhauptrohr mit einem Frischwasser gesammelt wird; ein an einem Ende des Frischwasserhauptrohrs angeordneter abgedichteter Frischwasserspeichertank (5) mit einer Unterdruckpumpe (5a) kommuniziert; der Auslass für konzentrierte Sole mittels einer Pumpe für konzentrierte Sole (5b) mit einem Rohr einer Salzanlage kommuniziert;
ein Meerwasserauslass des Meerwasserkühlers (4e) mittels eines Kondensatorkörpers (4d) des Schnellverdampferkörpers (4) mit einem Einlasshauptrohr des Heizers für aufbereitetes Meerwasser 83) kommuniziert; bei Nutzen von mindestens zweistufigen Meerwasserschnellverdampfern das Ausflusshauptrohr für aufbereitetes Meerwasser der Pumpe für aufbereitetes Meerwasser (9a) in dem Meerwasseraufbereitungssystem mit den Meerwasserauslässen der Kondensatorkörper (4d) des Meerwasserschnellverdampfers jeder Stufe kommuniziert;
der Auslass für konzentrierte Sole eines Schnellverdampferkörpers einer vorherigen Stufe (4) mit einem Einlass der Drosselvorrichtung (4a) eines Schnellverdampferkörpers der nächsten Stufe (4) kommuniziert und der Auslass für konzentrierte Sole eines Schnellverdampferkörpers einer letzten Stufe (4) mittels der Pumpe für konzentrierte Sole (5b) mit dem Rohr der Salzanlage kommuniziert; und Drücke in den Schnellverdampferkörpern (4) jeder Stufe allmählich reduziert werden, wodurch Unterdrücke gebildet werden.

2. Vorrichtung nach Anspruch 1, **dadurch gekennzeichnet, dass** eine Pumpe für erwärmtes Meerwasser (3a) mit einstellbarer Drehzahl zwischen dem Meerwasserauslass des Heizers für aufbereitetes Meerwasser (3) und dem Schnellverdampferkörper (4) angeordnet ist; der Meerwasserauslass des Heizers für aufbereitetes Meerwasser (3) mittels der Pumpe für erwärmtes Meerwasser (3a) mit der Drosselvorrichtung (4a), die an dem Schnellverdampferkörper (4) angeordnet ist, kommuniziert und die Drosselvorrichtung (4a) oberhalb einer Meerwasseroberfläche in dem Schnellverdampferkörper (4) angeordnet ist; in dem Schnellverdampferkörper (4) ein Schaumzerstörer (4b) oberhalb der Drosselvorrichtung (4a) angeordnet ist, oberhalb des Schaumzerstörers (4b) eine Frischwassersammelscheibe (4c) angeordnet ist und der Kondensatorkörper (4d) an der Meerwassersammelscheibe (4c) angeordnet ist; und der Dampfauslass an einer Oberseite des Schnellverdampferkörpers (4) angeordnet ist und der Frischwasserauslass oberhalb der Frischwassersammelscheibe (4c) angeordnet ist und der Auslass für konzentrierte Sole unterhalb der Drosselvorrichtung (4a) angeordnet ist.

3. Vorrichtung nach Anspruch 1 oder 2, **dadurch gekennzeichnet, dass** ein Meerwassertemperatursensor (3e) und ein Reservewärmetauscher (3c) in dem Heizer für aufbereitetes Meerwasser (3) angeordnet sind; und der Reservewärmetauscher (3c) einen Thermoölofen, einen Elektroheizungsofen, ein Abgas von Rauchgas eines Boilers oder Abgaswärme von Abwärme von einer Turbine als Wärmequelle nutzt.

4. Vorrichtung nach Anspruch 1, **dadurch gekennzeichnet, dass** die solarthermische Vorrichtung (1) ein turmartiger thermischer Solarkollektor, ein parabolrinnenartiger evakuierter Röhrenkollektor, ein glasartiger evakuierter Röhrenkollektor oder ein wärmerohrartiger evakuierter Röhrenkollektor ist.

5. Vorrichtung nach Anspruch 1, **dadurch gekennzeichnet, dass** der Meerwasserentnahmebrunnen (6a) an einem Meeresstrand (6a1) gebaut ist; eine Brunnenöffnung bei der höchsten Flut (6a2) oberhalb des Meeresspiegels angeordnet ist und ein Brunnenboden bei Ebbe (6a3) mehrere Meter unter einem Meeresspiegel angeordnet ist; eine Brunnenwand (6a4) eine poröse Zementstruktur nutzt, außerhalb der Brunnenwand (6a4) Schutt angeordnet ist und am Rand des Schutts Sand eingefüllt ist.

6. Verfahren zum Entsalzen von Meerwasser unter Verwenden der Meerwasserentsalzungsvorrichtung nach einem der Ansprüche 1-5, wobei das Verfahren umfasst: mehrstufiges Aufbereiten des Meerwassers, um aufbereitetes Meerwasser zu erzeugen; Sammeln von Sonnenenergie durch die solarthermische Vorrichtung (1), um das Wärmeübertragungsmedium zu erwärmen, wodurch die Sonnenenergie in Wärmeenergie des Wärmeübertragungsmediums umgewandelt wird; ständiges Erwärmen des aufbereiteten Meerwassers durch die Wärmeenergie des Wärmeübertragungsmediums auf eine voreingestellte Temperatur und Befördern des erwärmten aufbereiteten Meerwassers zu einem mindestens einstufigen Schnellverdampfer für Schnellverdampfung; Bildenlassen eines Unterdrucks in dem Körper (4) eines einstufigen Schnellverdampfers oder allmähliches Sinkenlassen von Drücken in den Schnellverdampferkörpern (4) jeder Stufe während mehrstufiger Schnellverdampfung, um einen Unterdruck zu bilden; Kondensieren eines Dampfs nach der Schnellverdampfung, um das Frischwasser abzuscheiden, und Umwandeln des verbleibenden Dampfs durch den Meerwasserkühler (4e) in Frischwasser; und Befördern einer nicht verdampften konzentrierten Sole von einem Boden des Schnellverdampfers zu der Salzanlage;
**dadurch gekennzeichnet, dass**
bei Nutzen von mehrstufigen Schnellverdampfern die konzentrierte Sole auf dem Boden des Schnellverdampfers der vorherigen Stufe nacheinander in einen Schnellverdampfer der nächsten Stufe strömt und das Frischwasser allmählich kondensiert und während des mehrstufigen Verdampfungsprozesses abgesondert wird und die nicht verdampfte konzentrierte Sole zu der Salzanlage befördert wird; und
gleichzeitig die Wärmeenergie des Sonnenlichts von der solarthermischen Vorrichtung (1) gesammelt wird und das Wärmeübertragungsmedium genutzt wird, um das aufbereitete Meerwasser zu erwärmen, die Wärmeenergie des Wärmeübertragungsmediums in dem Sonnenenergiespeichertank (2) gespeichert wird, um das aufbereitete Meerwasser während Nachtstunden oder an wolkigen Tagen ständig mithilfe des gespeicherten Wärmeübertragungsmediums zu erwärmen.

7. Verfahren nach Anspruch 6, **dadurch gekennzeichnet, dass** die voreingestellte Temperatur des aufbereiteten Meerwassers, das von dem Wärmeübertragungsmedium erwärmt wird, bei 55°C-70°C oder 70°C-120°C liegt und das Wärmeübertragungsmedium durch die solarthermische Vorrichtung (1) auf eine Temperatur von 178°C-600°C erwärmt wird.

8. Verfahren nach Anspruch 6, **dadurch gekennzeichnet, dass** die voreingestellte Temperatur des aufbereiteten Meerwassers, das von dem Wärmeübertragungsmedium erwärmt wird, bei 70°C liegt und das Wärmeübertragungsmedium durch die solarthermische Vorrichtung (1) auf die Temperatur von 275°C-395°C erwärmt wird.

## Revendications

1. Appareil de dessalement d'eau de mer utilisant de l'énergie solaire pour fournir de la chaleur en continu, l'appareil comprenant : un système de purification d'eau de mer, et un système de dessalement d'eau de mer ; **caractérisé en ce que**
le système de purification d'eau de mer est un système de purification à étages multiples comprenant un puits d'extraction d'eau de mer (6a) pour une filtration grossière, un clarificateur stérilisateur d'eau de mer (6), un filtre d'ultrafiltration à étages multiples (7) pourvu d'une couche de filtre à charbon actif (7b) et d'une couche centrale de filtre multifibre (7c), et une colonne de désoxygénation-décarbonatation (9) pour la désoxygénation et la décarbonatation, agencés les uns à la suite des autres ;
un réservoir d'eau de mer purifiée (8) est disposé entre le filtre d'ultrafiltration à étages multiples (7) et la colonne de désoxygénation-décarbonatation (9) ; la colonne de désoxygénation-décarbonatation (9) communique avec une sortie principale d'eau de mer purifiée ;
le puits d'extraction d'eau de mer (6a) communique avec le clarificateur stérilisateur d'eau de mer (6) par le biais d'une pompe élévatrice d'eau de mer (6b) ; le clarificateur stérilisateur d'eau de mer (6) communique avec le filtre d'ultrafiltration à étages multiples (7) par le biais d'une première pompe de transport d'eau de mer (7a) ; le filtre d'ultrafiltration à étages multiples (7) communique avec le réservoir d'eau de mer purifiée (8) par le biais d'une seconde pompe de transport d'eau de mer (8a) ; le réservoir d'eau de mer purifiée (8) communique avec la colonne de désoxygénation-décarbonatation (9) par le biais d'une troisième pompe de transport d'eau de mer (8a) ; la colonne de désoxygénation-décarbonatation (9) communique avec la sortie principale d'eau de mer purifiée par le biais d'une pompe à eau de mer purifiée (9a) ;
un microbiocide et un floculant sont ajoutés au clarificateur stérilisateur d'eau de mer (6) ;
et
le système de dessalement d'eau de mer comprend : un appareil thermosolaire (1) destiné à concentrer de l'énergie solaire et collecter de la chaleur, un réservoir de stockage de chaleur issue de l'énergie solaire (2), un dispositif de chauffage d'eau de mer purifiée (3) et au moins un étage d'évaporateur flash d'eau de mer ;
l'évaporateur flash d'eau de mer comprend : un corps d'évaporateur flash (4) et un refroidisseur d'eau de mer (4e) ;
une chambre d'agent de transfert de chaleur de l'appareil thermosolaire (1), le réservoir de stockage de chaleur issue de l'énergie solaire (2), un premier échangeur de chaleur (3b) du dispositif de chauffage d'eau de mer purifiée (3) utilisant un agent de transfert de chaleur comme source de chaleur et une pompe à agent de transfert de chaleur (2a) disposée entre le réservoir de stockage de chaleur issue de l'énergie solaire (2) et le premier échangeur de chaleur (3b) du dispositif de chauffage d'eau de mer purifiée (3) sont connectés les uns à la suite des autres pour former une voie étanche de circulation de l'agent de transfert de chaleur ;
une conduite principale de sortie d'eau de mer purifiée d'une pompe de transport d'eau de mer purifiée (9a) du système de purification d'eau de mer communique avec une entrée du dispositif de chauffage d'eau de mer purifiée (3) et du refroidisseur d'eau de mer (4e) ; une sortie d'eau de mer du dispositif de chauffage d'eau de mer purifiée (3) communique avec une entrée d'un dispositif d'étranglement (4a) du corps d'évaporateur flash (4) du premier étage par le biais d'une pompe à eau de mer chauffée (3a) ;
le corps d'évaporateur flash (4) comprend : une sortie de saumure concentrée, une sortie d'eau fraîche, et une sortie de vapeur ; la vapeur évacuée par la sortie de vapeur passe à travers un second échangeur de chaleur (4f) du refroidisseur d'eau de mer (4e) utilisant de la vapeur comme source de chaleur et est accumulée avec une eau fraîche dans une conduite principale d'eau fraîche ; un réservoir étanche de stockage d'eau fraîche (5) disposé à une extrémité de la conduite principale d'eau fraîche communique avec une pompe à vide (5a) ; la sortie de saumure concentrée communique avec une conduite d'une installation de production de sel par le biais d'une pompe à saumure concentrée (5b) ;
une sortie d'eau de mer du refroidisseur d'eau de mer (4e) communique avec une conduite principale d'entrée du dispositif de chauffage d'eau de mer purifiée (3) par le biais d'un corps de condenseur (4d) du corps d'évaporateur flash (4) ; quand des évaporateurs flash d'eau de mer à au moins deux étages sont utilisés, la conduite principale de sortie d'eau de mer purifiée de la pompe à eau de mer purifiée (9a) du système de purification d'eau de mer communique avec les sorties d'eau de mer des corps de condenseur (4d) d'évaporateur flash d'eau de mer de chaque étage ;
la sortie de saumure concentrée d'un corps d'évaporateur flash (4) d'étage précédent communique avec une entrée du dispositif d'étranglement (4a) d'un corps d'évaporateur flash (4) d'étage suivant, et la sortie de saumure concentrée d'un corps d'évaporateur flash (4) de dernier étage communique avec la conduite de l'installation de production de sel par le biais de la pompe à saumure concentrée (5b) ; et des pressions dans les corps d'évaporateur flash (4) de chaque étage sont diminuées graduellement, formant ainsi des pressions négatives.

2. Appareil selon la revendication 1, **caractérisé en ce qu'**une pompe à eau de mer chauffée (3a) présentant une vitesse de rotation réglable est disposée entre la sortie d'eau de mer du dispositif de chauffage d'eau de mer purifiée (3) et le corps d'évaporateur flash (4) ; la sortie d'eau de mer du dispositif de chauffage d'eau de mer purifiée (3) communique avec le dispositif d'étranglement (4a) disposé sur le corps d'évaporateur flash (4) par le biais de la pompe à eau de mer chauffée (3a), et le dispositif d'étranglement (4a) est disposé au-dessus d'une surface d'eau de mer dans le corps d'évaporateur flash (4) ; dans le corps d'évaporateur flash (4), un dispositif antimousse (4b) est disposé au-dessus du dispositif d'étranglement (4a), un disque de collecte d'eau fraîche (4c) est disposé au-dessus du dispositif antimousse (4b), et le corps de condenseur (4d) est disposé sur le disque de collecte d'eau fraîche (4c) ; et la sortie de vapeur est disposée en haut du corps d'évaporateur flash (4), et la sortie d'eau fraîche est disposée au-dessus du disque de collecte d'eau fraîche (4c), et la sortie de saumure concentrée est disposée sous le dispositif d'étranglement (4a).

3. Appareil selon la revendication 1 ou 2, **caractérisé en ce qu'**un capteur de température d'eau de mer (3e) et un échangeur de chaleur de réserve (3c) sont disposés dans le dispositif de chauffage d'eau de mer purifiée (3) ; et l'échangeur de chaleur de réserve (3c) prend comme source de chaleur un appareil de chauffage à mazout, un appareil de chauffage électrique, de la chaleur dissipée de gaz de combustion d'une chaudière, ou de la chaleur dissipée sous forme de chaleur perdue d'une turbine.

4. Appareil selon la revendication 1, **caractérisé en ce que** l'appareil thermosolaire (1) est un capteur solaire thermique de type tour, un capteur à tube sous vide de type cylindro-parabolique, un capteur à tube sous vide de type en verre ou un capteur à tube sous vide de type à caloduc.

5. Appareil selon la revendication 1, **caractérisé en ce que** le puits d'extraction d'eau de mer (6a) est construit sur une plage de bord de mer (6a1) ; une ouverture de puits est disposée au-dessus d'un niveau de la mer à marée haute (6a2), et un fond de puits est disposé plusieurs mètres sous un niveau de la mer à marée basse (6a3) ; une paroi de puits (6a4) présente une structure de béton poreux, des moellons (6a5) sont agencés à l'extérieur de la paroi de puits (6a4), et du sable est rempli dans la périphérie des moellons.

6. Procédé de dessalement d'eau de mer utilisant l'appareil de dessalement d'eau de mer selon l'une quelconque des revendications 1 à 5, le procédé consistant à : purifier par étages multiples l'eau de mer afin de produire une eau de mer purifiée ; collecter de l'énergie solaire au moyen de l'appareil thermosolaire (1) afin de chauffer l'agent de transfert de chaleur, convertissant ainsi l'énergie solaire en énergie thermique de l'agent de transfert de chaleur ; chauffer en continu l'eau de mer purifiée à une température préréglée au moyen de l'énergie thermique de l'agent de transfert de chaleur, et transporter l'eau de mer purifiée chauffée dans un évaporateur flash à au moins un étage pour l'évaporation flash ; permettre à une pression négative de se former dans le corps (4) d'un évaporateur flash à un étage, ou à des pressions dans les corps d'évaporateur flash (4) de chaque étage de diminuer graduellement pour former une pression négative pendant l'évaporation flash à étages multiples ; condenser une vapeur après l'évaporation flash afin de séparer l'eau fraîche, et convertir de la vapeur résiduelle en eau fraîche au moyen du refroidisseur d'eau de mer (4e) ; et transporter une saumure concentrée non vaporisée d'un fond de l'évaporateur flash à une installation de production de sel ;
**caractérisé en ce que**,
lorsque des évaporateurs flash à étages multiples sont utilisés, la saumure concentrée au fond de l'évaporateur flash de l'étage précédent s'écoule successivement dans un évaporateur flash d'étage suivant, et l'eau fraîche est graduellement condensée et séparée pendant le processus d'évaporation à étages multiples, et la saumure concentrée non vaporisée est transportée dans l'installation de production de sel; et
en même temps, l'énergie thermique de la lumière solaire est collectée par l'appareil thermosolaire (1) et l'agent de transfert de chaleur est utilisé pour chauffer l'eau de mer purifiée, l'énergie thermique de l'agent de transfert de chaleur est stockée dans le réservoir de stockage de chaleur issue de l'énergie solaire (2) afin de chauffer en continu l'eau de mer purifiée au moyen de l'agent de transfert de chaleur stocké pendant des périodes nocturnes ou des journées à temps couvert.

7. Procédé selon la revendication 6, **caractérisé en ce que** la température préréglée de l'eau de mer purifiée chauffée par l'agent de transfert de chaleur est de 55 °C à 70 °C ou de 70 °C à 120 °C, et l'agent de transfert de chaleur est chauffé à une température de 178 °C à 600 °C par l'appareil thermosolaire (1).

8. Procédé selon la revendication 6, **caractérisé en ce que** la température préréglée de l'eau de mer purifiée chauffée par l'agent de transfert de chaleur est de 70 °C, et l'agent de transfert de chaleur est chauffé à la température de 275°C à 395 °C par l'appareil thermosolaire (1).
